# EUROPÄISCHE PATENTANMELDUNG

(11) **EP 2 219 014 A1**
(43) Veröffentlichungstag der Anmeldung: **18.08.2010**
(21) Anmeldenummer: 08017268.7
(22) Anmeldetag: 01.10.2008
(51) Int. Cl.: G01F 1/84

(54) **Ablassvorrichtung für verflüssigte Gase zum Antrieb von Land- und/oder Wasserfahrzeugen**

(30) Priorität: 02.05.2008 DE 202008006068 U
(71) Anmelder: Bohlen & Doyen Bauunternehmung GmbH, 26639 Wiesmoor (DE)
(72) Erfinder: Knitterscheidt, Sven, 42289 Wuppertal (DE); Schäfer, Jochen, 58332 Schwerin (DE)
(74) Vertreter: Siekmann, Gunnar

(57) **Zusammenfassung**

Die Erfindung betrifft eine Ablassvorrichtung für verflüssigte Gase zum Antrieb von Land- und/oder Wasserfahrzeugen, insbesondere für ein Propan-Butan-Gemisch zum Antrieb von Personenkraftwagen, mit einem säulenartigen Gehäuse und mit zumindest einem Ablassschlauch, wobei in dem Gehäuse zumindest ein Volumenstrommessgerät angeordnet ist. Das Volumenstrommessgerät umfasst einen Leitungsabschnitt für das verflüssigte Gas. Diesem Leitungsabschnitt ist ein Coriolis-Massemesser zugeordnet, welcher mit einer Zählauswertevorrichtung verschaltet ist.

## Beschreibung

Die Erfindung betrifft eine Ablassvorrichtung für verflüssigte Gase zum Antrieb von Land- und/oder Wasserfahrzeugen, insbesondere für ein Propan-Butan-Gemisch zum Antrieb von Personenkraftwagen, mit einem säulenartigen Gehäuse und mit zumindest einem Ablassschlauch, wobei in dem Gehäuse zumindest ein Volumenstrommessgerät angeordnet ist.

Verflüssigte Gase werden für den Antrieb von Fahrzeugen, insbesondere von eingesetzt. Propan-Butan-Gemische werden beispielsweise unter dem Kürzel LPG als Kraftstoffe für Personenkraftfahrzeuge vermarktet. Da verflüssigte Gase anders besteuert werden als Benzin und Diesel, sind günstige Abgabepreise für die verflüssigten Gase möglich, sodass bei weiter steigenden Preisen für Benzin und Diesel immer mehr Führer von Personenkraftwagen über die alternativen Kraftstoffe verflüssigte Gase nachdenken.

Die Führer von Personenkraftwagen erwarten bei einer Betankung ihrer Fahrzeuge mit verflüssigten Gasen den gleichen Tankkomfort wie bei Benzin oder Diesel. Daher werden gattungsgemäße Ablassvorrichtungen nach Art von Zapfstellen für Benzin und Diesel ausgebildet, indem gattungsgemäße Ablassvorrichtung säulenartige Gehäuse mit zumindest einem Ablassschlauch aufweisen. Der Ablassschlauch kann mit den Personenkraftwagen oder auch mit einem anderen Kraftfahrzeug flüssigkeitsdicht verbunden werden, um die verflüssigten Gase in den im Kraftfahrzeug vorhandenen Tank einzufüllen.

Damit die verfüllte Gasmenge auch für den Betreiber der Ablassvorrichtung richtig abgerechnet wird, ist in dem Gehäuse zumindest ein Volumenstrommessgerät vorgesehen. Dieses erfasst die Menge der abgefüllten Gase.

Problematisch bei bekannten Ablassvorrichtungen ist, dass die verflüssigten Gase unter einem Druck gehalten werden müssen, um ihr Übertreten in den gasförmigen Zustand zu verhindern. Da z.B. Undichtigkeiten auftreten können, ist das Vorhandensein von Gasblasen in der Flüssigkeit möglich, welche bei bekannten Ablassvorrichtungen das Vorsehen eines Gasblasenabscheiders erfordern. Der apparative Aufwand ist durch den Gasblasenabscheider erhöht. Das eigentliche Messen des Volumenstromes erfolgt beim Stand der Technik regelmäßig mit einem Kolbenzähler. Problematisch ist hier, dass dieser Kolbenzähler verschleißen kann, da durch die verflüssigten Gase keine Schmierung erfolgt. Wenn beim Stand der Technik in eine Ablassvorrichtung auch noch ein Druckhalteventil eingesetzt wird, besteht die Gefahr, dass eine Membran dieses Ventils reißt und das System ungenau wird. Regelmäßige kostenpflichtige Eichprüfungen sind daher notwendig.

Der Erfindung liegt die Aufgabe zugrunde, eine Ablassvorrichtung der eingangs genannten Gattung aufzuzeigen, welche apparativ vereinfacht ist, keine verschleißenden Bauteile enthält und eine exakte Bestimmung des Volumenstroms ermöglicht.

Diese Aufgabe ist erfindungsgemäß dadurch gelöst, dass das Volumenstrommessgerät einen Leitungsabschnitt für das verflüssigte Gas umfasst, und dass diesem Leitungsabschnitt ein Coriolis-Massemesser zugeordnet ist, welcher mit einer Zählauswertevorrichtung verschaltet ist.

Bei der erfindungsgemäßen Ablassvorrichtung wird auf die Verwendung von Gasblasenabscheider, Kolbenzähler und Druckhalteventil verzichtet, sodass die mit diesen Bauteilen verbundenen Probleme vorteilhaft nicht auftreten.

Statt eines verschleißenden Kolbenzählers für das Bestimmen des Volumenstromes wird ein Coriolis-Massemesser eingesetzt. Dieser Coriolis-Massemesser kann so kompakt ausgeführt sein, dass er in ein bekanntes säulenartiges Gehäuse aufnehmbar ist. Der Coriolis-Massemesser ist einem Leitungsabschnitt für das verflüssigte Gas definiert zugeordnet, weiterhin ist er mit einer Zählauswertevorrichtung verschaltet. Der mit dem Coriolis-Massemesser festgestellte Volumenstrom kann vom Coriolis-Massemesser quantifiziert werden und an die Zählauswertevorrichtung weitergereicht werden.

Bei einem Coriolis-Massemesser wird die Schwingung des Leitungsabschnittes aufgrund des Durchflusses des Leitungsabschnittes mit dem verflüssigten Gas gemessen. Um hier präziser messen zu können, schlägt eine Weiterbildung der Erfindung vor, dass der Leitungsabschnitt in wenigstens zwei Teilleitungen aufgeteilt ist. Beide Teilleitungen sind vorzugsweise parallel zueinander angeordnet, auf bevorzugte Weise sind sie aus einem Leichtbaumaterial gefertigt.

Das Messprinzip eines Coriolis-Massemesser beruht auf dem Phänomen der Corioliskraft, die dann auftritt, wenn sich gleichzeitig translatorische und rotatorische Bewegungen überlagern. Hauptfaktoren für die auftretende Größe der Corioliskraft sind die bewegte Masse und deren Geschwindigkeiten in einem solchen System. Je größer der Massenfluss, desto größer ist auch die auftretende Corioliskraft. Der erfindungsgemäße eingesetzte Coriolis-Massemesser besteht im Wesentlichen aus vorzugsweise zwei Messrohren, die durch die Teilleitungen ausgebildet werden.

Eine Weiterbildung der Erfindung sieht vor, dass der Coriolis-Massemesser eine Erregerspule und zumindest zwei Messspulen aufweist, wobei die Erregerspule etwa einem mittleren Abschnitt des Leitungsabschnitts zugeordnet ist, eine Messspule bezüglich der Erregerspule an einem Einlaufabschnitt des Leitungsabschnittes angeordnet ist und die zweite Messspule an einem Auslaufabschnitt angeordnet ist. Mit der Erregerspule wird der Leitungsabschnitt in Schwingung gebracht. Werden beispielsweise die schwingenden Teilleitungen durchströmt, treten die oben genannten Überlagerungen von geradlinigen und drehenden Bewegungen auf und verursachen eine Verschiebung der im leer- bzw. nichtdurchströmten Zustand symmetrischen Auslenkung. Die Leitungsabschnittschwingung wird unsymmetrisch. Diese Schwingveränderung kann mittels elektrodynamischer Sensoren als Phasendifferenz detektiert werden. Die Sensoren werden durch die Messspulen ausgebildet, die an den Enden des Leitungsabschnittes angeordnet sind und zwischen sich die Erregerspule aufnehmen. Die detektierte Phasendifferenz ist direkt proportional zum Massendurchfluss. Die maximale Auslenkung des Leitungsabschnittes durch die Erregerspule und an den elektrodynamischen Sensoren zum Abgriff der Phasenverschiebung bei einer optimal ausgelegten Vorrichtung erfolgt in einer vom Hersteller vorgegebenen Schwingamplitude von wenigen µm.

Der an die Erregerspule geleitete Strom wird durch eine Messvorrichtung gemessen. Für die Durchführung der Messung wird die Temperatur der Umgebung berücksichtigt, dafür ist dem Leitungsabschnitt eine Temperaturmessvorrichtung zugeordnet.

Ein Ausführungsbeispiel der Erfindung, aus dem sich weitere erfinderische Merkmale ergeben, ist in der Zeichnung dargestellt. Es zeigen:
- Fig. 1:: eine schematische Darstellung der erfindungsgemäßen Ablassvorrichtung für verflüssigte Gase für Kraftfahrzeuge,
- Fig. 2:: eine perspektivische Ansicht eines in der Ablassvorrichtung enthaltenen Bauelementes.

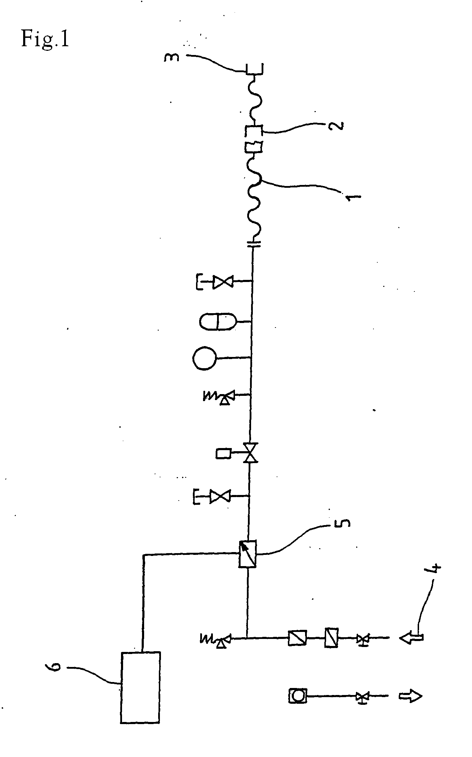

Die Ablassvorrichtung in Fig. 1 weist in einem nicht weiter dargestellten Gehäuse angeordnete Bauteile sowie einen Ablassschlauch 1 auf. Am Ablassschlauch 1 ist über eine Abreißsicherung 2 eine Zapfpistole 3 angeordnet.

Das verflüssigte Gas wird in einem nicht dargestellten Vorratsbehälter unter einem Überdruck um etwa 6 bis 8 bar bevorratet. Diesem Vorratsbehälter wird das verflüssigte Gas entlang des Pfeils 4 entnommen. Im Leitungsverlauf zwischen dem Pfeil 4 und dem Schlauch 1 ist ein Coriolis-Massemesser 5 angeordnet. Das Volumen des durch diesen Massemesser 5 fließenden verflüssigten Gases wird festgestellt und an eine Zählauswertevorrichtung 6 gesandt. Die weiteren Bauteile im Fließweg zwischen Pfeil 4 und Schlauch 1 sind Kugelhähne, Filter, Ventile und Manometer; Gasblasenabscheider und Kolbenzähler sind dagegen nicht erforderlich.

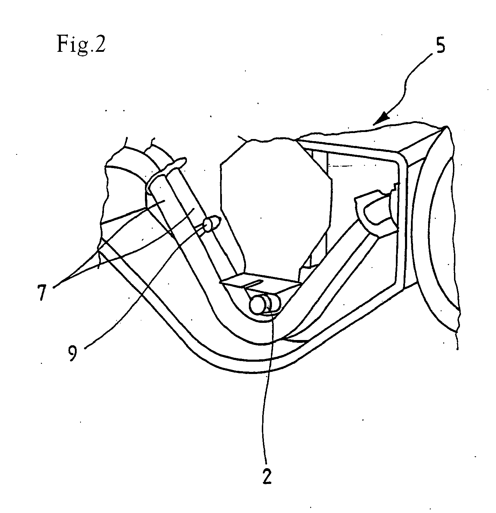

Fig. 2 zeigt den Coriolis-Massemesser 5. Die Leitung für das verflüssigte Gas ist im Bereich dieses Massemessers 5 in zwei Teilleitungen 7 aufgeteilt. Etwa auf der Hälfte ihrer Längserstreckung ist den Teilleitungen 7 eine Erregerspule 8 zugeordnet. Zu beiden Seiten der Erregerspule 8 sind den Teilleitungen 7 darüber hinaus Messspulen 9 angenähert. Die Teilleitungen 7 werden in einem mittleren Abschnitt ihrer Erstreckung durch die Erregerspule 8 in Schwingung gebracht. Der dazu notwendige Strom wird als Erregerstrom bezeichnet, seine Höhe ist abhängig von der Teilleitungsdämpfung, die von der zu bewegenden Masse der Teilleitung 7, das heißt, von der Nennweite des Gerätes und der Dichte des Mediums in der Teilleitung 7, abhängig ist. Typischerweise liegt der Erregerstrom bei einer Nennweite DN 15 bei leerer Teilleitung 7 bei ca. 5 mA, bei einer mit Wasser gefüllten Teilleitung 7 bei ca. 10 mA. Diese Werte beziehen sich auf homogene Medien. Inhomogenitäten, wie z.B. Gasblasen, beeinflussen die Dämpfung der Teilleitung 7. Gasblasen werden durch die Teilleitungsschwingung komprimiert, um anschließend zu expandieren. Sie verhalten sich wie Stoßdämpfer und nehmen Energie auf. Daraus resultiert eine zusätzliche Dämpfung der schwingenden Teilleitung 7, was zu einer Erhöhung des Erregerstroms führt.

Die Detektion von Gasblasen durch die Interpretation des Erregerstroms kann auf diese Weise durchgeführt werden. Ist der Erregerstrom unter Betriebsbedingungen in der jeweiligen Applikation bekannt und somit als Sollwert vorhanden, kann durch Überwachung dieses Sollwertes eine Erhöhung des Erregerstroms detektiert werden, was z.B. auf Gasblasen im Medium zurückgeführt werden kann. Die Größe der Erregerstromveränderung ist abhängig von der Gasblasenkonzentration und von der Größe der einzelnen Gasblase. Veränderungen der Teilleitungsdämpfung können auch durch Feststoffe, Belagsbildung oder Korrosion an der Teilleitung verursacht werden.

Durch eine Überwachung des Erregerstroms kann eine Homogenität des Mediums überwacht werden und Inhomogenitäten können erkannt werden. Hierzu ist es sinnvoll, in jeder Applikation den Sollwert empirisch zu ermitteln und anschließend den Sollwert und den Sollwertbereich zu definieren. Im Vergleich zu anderen Einflussgrößen verändert sich bei einem Gasblasenanteil im Medium der Erregerstrom sehr schnell und sehr stark.

Neben der Detektion von Gasblasen ist es aber auch möglich, den Volumenstrom als solchen zu quantifizieren, um eine Volumenstrommessung durchzuführen. Zwischen der ersten Spule am Einlauf und der zweiten Spule am Auslauf kann eine Differenzmessung erfolgen. Über die Resonanzfrequenz ist es möglich, die Dichte des Mediums zu messen und darüber hinaus den Volumenstrom zu bestimmen. Die Messung erfolgt zeitgleich zum Durchfluss und mit einer hohen Genauigkeit. Abweichungen von 0,05 % konnten beobachtet werden. Das Messen erfolgt berührungslos und in kompakter Bauform. Ein Verschleiß ist nicht gegeben, sodass ein z.B. jährlichen Eichen der erfindungsgemäßen Vorrichtung nicht erforderlich ist. Coriolis-Massemesser dieser Art werden von der Firma Endress + Hauser in Weil am Rhein hergestellt.

## Patentansprüche

1. Ablassvorrichtung für verflüssigte Gase zum Antrieb von Land- und/oder Wasserfahrzeugen, insbesondere für ein Propan-Butan-Gemisch für Personenkraftwagen, mit einem säulenartigen Gehäuse und mit zumindest einem Ablassschlauch, wobei in dem Gehäuse zumindest ein Volumenstrommessgerät angeordnet ist,
**dadurch gekennzeichnet,**
**dass** das Volumenstrommessgerät einen Leitungsabschnitt für das verflüssigte Gas umfasst und dass diesem Leitungsabschnitt ein Coriolis-Massemesser (5) zugeordnet ist, welcher mit einer Zählauswertevorrichtung (6) verschaltet ist.

2. Ablassvorrichtung nach Anspruch 1, **dadurch gekennzeichnet, dass** der Leitungsabschnitt in wenigstens zwei Teilleitungen (7) aufgeteilt ist.

3. Ablassvorrichtung nach Anspruch 1 oder 2, **dadurch gekennzeichnet, dass** die Teilleitungen (7) aus einem Leichtbaumaterial gefertigt sind.

4. Ablassvorrichtung nach einem der vorher genannten Ansprüche, **dadurch gekennzeichnet, dass** der Coriolis-Massemesser (5) eine Erregerspule (8) und zumindest zwei Messspulen (9) aufweist, wobei die Erregerspule (8) etwa einem mittleren Abschnitt des Teilungsabschnitts zugeordnet ist, eine Messspule (5) bzw. der Erregerspule (8) an einem Einlaufabschnitt des Leitungsabschnitts angeordnet ist und die zweite Messspule (9) an einem Auslaufabschnitt angeordnet ist.

5. Ablassvorrichtung nach Anspruch 4, **dadurch gekennzeichnet, dass** eine Messvorrichtung für den an die Erregerspule (8) geleiteten Strom vorgesehen ist.

6. Ablassvorrichtung nach einem der vorhergehenden Ansprüche, **dadurch gekennzeichnet, dass** dem Leitungsabschnitt eine Temperaturmessvorrichtung zugeordnet ist.
